# EUROPEAN PATENT APPLICATION

(11) **EP 3 883 225 A1**
(43) Date of publication of application: **22.09.2021**
(21) Application number: 19885605.6
(22) Date of filing: 13.11.2019
(51) Int. Cl.: H04M 1/04

(54) **SELFIE STICK, AND PHOTOGRAPHING CONTROL SYSTEM AND METHOD THEREFOR**

(30) Priority: 16.11.2018 CN 201811369198
(71) Applicant: Winners' Sun Plastic & Electronic (Shenzhen) Co., Ltd., Shenzhen Guangdong 518000 (CN)
(72) Inventor: SHAN, Jinghua, Shenzhen, Guangdong 518000 (CN); PENG, Yi Bing, Shenzhen, Guangdong 518000 (CN)
(74) Representative: Li, Xiaolu
(86) International application number: PCT/CN2019/118218
(87) International publication number: WO 2020/098724

(57) **Abstract**

The present disclosure relates to a field of selfie technology, and in particular to a selfie stick. The selfie stick includes a handle and a clamping device connected with the handle and configured to clamp a shooting device. A capacitive touch module is arranged on a surface of the handle. The capacitive touch module is provided with a curved surface. The capacitive touch module is configured to control the matched shooting device. The present disclosure further provides a photographing control system and method thereof. By providing the handle, the clamping device configured to clamp the shooting device, and the capacitive touch module arranged on the surface of the handle that configured to control the matched shooting device, and by controlling the capacitive touch module to control the shooting device matched with the selfie stick, a use does not need to pull the shooting device for adjustment.

## Description

### TECHNICAL FIELD

The present disclosure relates to a field of selfie technology, and in particular to a selfie stick, a photographing control system, and a method thereof.

### BACKGROUND

With development of camera equipment, cameras and camcorders have been widely used in daily life as convenient tools to record moments of people's lives. In particular, gradual popularization of photography equipment such as mobile phones and tablets with camera and video functions enables people to take photos and videos anytime and anywhere.

When people take selfies with shooting devices, they often use a selfie stick to fix a shooting device for auxiliary shooting. The selfie stick is arbitrarily stretchable within a certain length. A user only needs to press a shutter button on the selfie stick to achieve multi-angle selfies.

In the prior art, when the shooting device is fixed on the conventional selfie stick, and when the user uses common selfie adjustment functions such as filter effect adjustments or focal length adjustments of the shooting device, the shooting device needs to be pulled close to the user for adjustment, which is inconvenient to operate.

### SUMMARY

Technical problems to be solved by the present disclosure is to provide a selfie stick, a photographing control system, and a method thereof in view of above-mentioned defects of the prior art, which overcomes a problem of inconvenient for operation and a need to pull the shooting device closer to a user and control the shooting device when using the selfie stick to assist the shooting device for photographing.

Technical solutions adopted by the present disclosure to solve the problems in the prior art is to provide a selfie stick. The selfie stick comprises a handle and a clamping device connected with the handle and configured to clamp a shooting device. A capacitive touch module is arranged on a surface of the handle. The capacitive touch module is provided with a curved surface. The capacitive touch module is configured to control the matched shooting device.

In one optional embodiment, the clamping device comprises a stage and a stretchable clamping mechanism arranged on the stage. The stretchable clamping mechanism is configured to clamp the shooting device.

In one optional embodiment, the stage is of a cylindrical structure. The stage comprises a storage groove. The stretchable clamping mechanism is movably received in the storage groove.

In one optional embodiment, the stretchable clamping mechanism comprises an upper clamping plate, a connecting plate, at least one first pulling rod, and at least one second pulling rod. At least one first blind hole and at least one second blind hole are on the connecting plate. The upper clamping plate is connected with the at least one first pulling rod. The at least one first pulling rod is movably arranged in the at least one first blind hole. The stage is connected with the at least one second pulling rod. The at least one second pulling rod is movably arranged in the at least one second blind hole.

In one optional embodiment, the selfie stick further comprises a connecting portion. The clamping device is rotatably arranged on one end of the handle through the connecting portion.

In one optional embodiment, the capacitive touch module is ringed on the handle and has an uneven surface.

Technical solutions adopted by the present disclosure to solve the problems in the prior art is to provide a photographing control system. The photographing control system comprises the selfie stick described above. The photographing control system further comprises a controller module arranged in the handle. The controller module is respectively connected with the shooting device and the capacitive touch module.

In one optional embodiment, the capacitive touch module comprises a touch detecting unit ringed on the handle and a processor unit. The processor unit is connected with the controller module and the touch detecting unit. The touch detecting unit transmits touch signals to the processor unit for processing.

In one optional embodiment, the controller module comprises a BLUETOOTH processing unit and an antenna connected with the BLUETOOTH processing unit. The BLUETOOTH processing unit is connected with the shooting device and the processor unit. The BLUETOOTH processing unit is connected with the processor unit to obtain data processed by the processor unit and transmit the data to the shooting device through the antenna.

In one optional embodiment, the photographing control system further comprises a lithium battery arranged in the handle and a charging module. The lithium battery is connected with the controller module and the capacitive touch module. The charging module is connected with the lithium battery.

Technical solutions adopted by the present disclosure to solve the problems in the prior art is to provide a photographing control method. The photographing control method is applied to the photographing control system described above. The photographing control method comprises steps:
completing a connection between a shooting device and a selfie stick by using a BLUETOOTH function;
controlling the shooting device by controlling a capacitive touch module; and
interacting with the shooting device by a beauty camera application of the shooting device to complete a control action of the selfie stick on the shooting device.

Compared with the prior art, the present disclosure provides the selfie stick, the photographing control system and method thereof. By providing the handle, the clamping device configured to clamp the shooting device, and the capacitive touch module of the curved surface arranged on the surface of the handle that configured to control the matched shooting device, and by controlling the capacitive touch module to control the shooting device matched with the selfie stick, a use does not need to pull the shooting device close for adjustment, which is convenient in operation.

### BRIEF DESCRIPTION OF DRAWINGS

The present disclosure will be further described below in conjunction with accompanying drawings and embodiments. In the accompanying drawings:
FIG. 1 is a perspective schematic diagram showing a structure of a selfie stick of the present disclosure where the selfie stick is in a folded state.
FIG. 2 is a perspective schematic diagram showing the structure of the selfie stick of the present disclosure where a stretchable clamping mechanism is stretched out.
FIG. 3 is a perspective schematic diagram showing the structure of the selfie stick of the present disclosure where a telescopic rod is stretched out and a clamping device is in a rotating state.
FIG. 4 is a perspective schematic diagram showing the structure of the selfie stick of the present disclosure where the telescopic rod is stretched out and the clamping device is in a vertical state.
FIG. 5 is an exploded schematic diagram of a rotating portion of the present disclosure.
FIG. 6 is a structural block diagram of the photographing control system of the present disclosure.
FIG. 7 is a circuit schematic diagram of a controller module of the present disclosure.
FIG. 8 is a schematic diagram of an internal circuit of a touch detecting unit of the present disclosure.
FIG. 9 is a circuit schematic diagram of a charging module of the present disclosure.
FIG. 10 is a flowchart of a photographing control method of the present disclosure.

### DETAILED DESCRIPTION

Optional embodiments of the present disclosure will be described in detail with reference to the accompanying drawings.

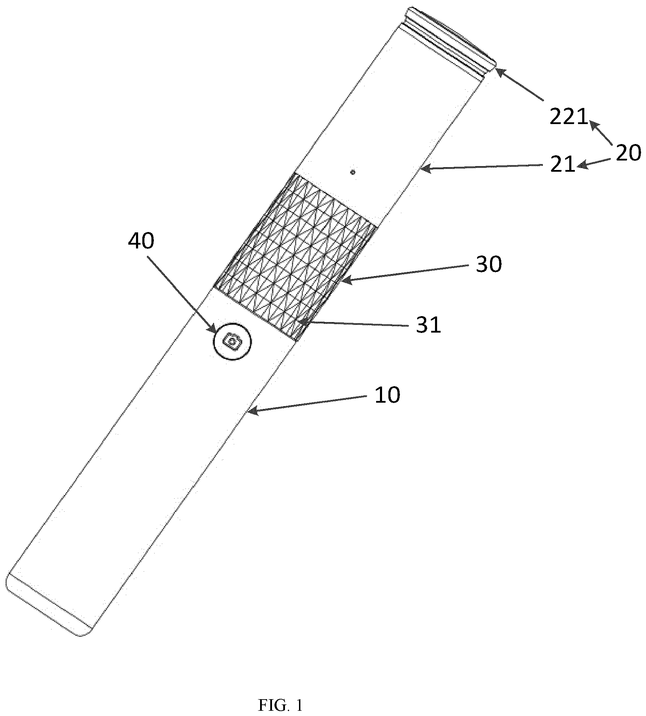

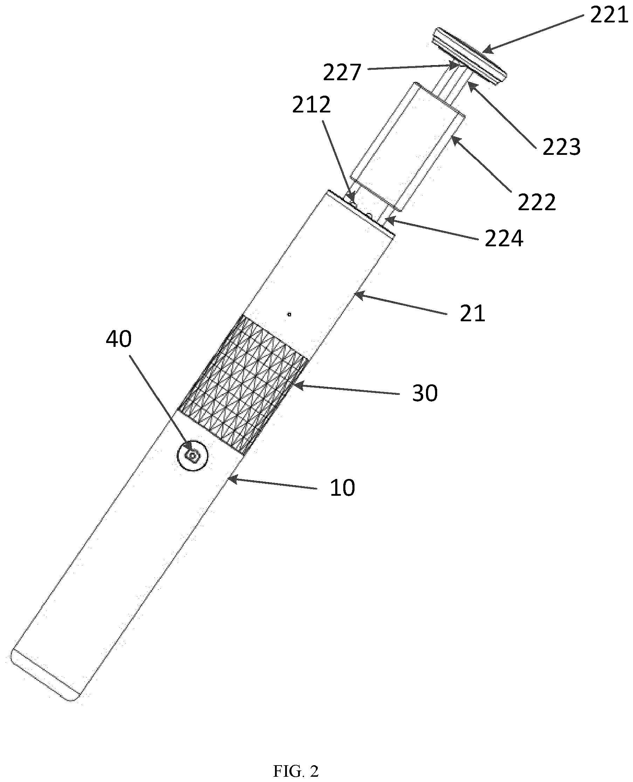

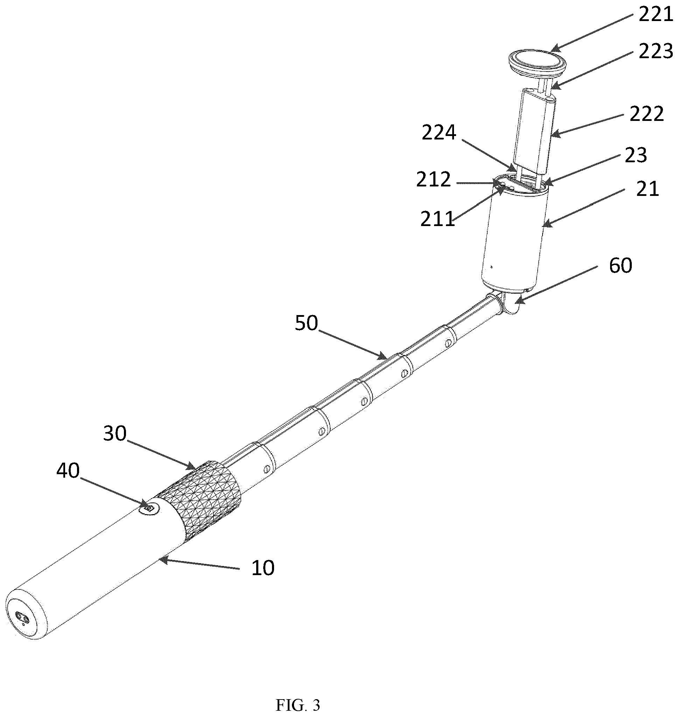

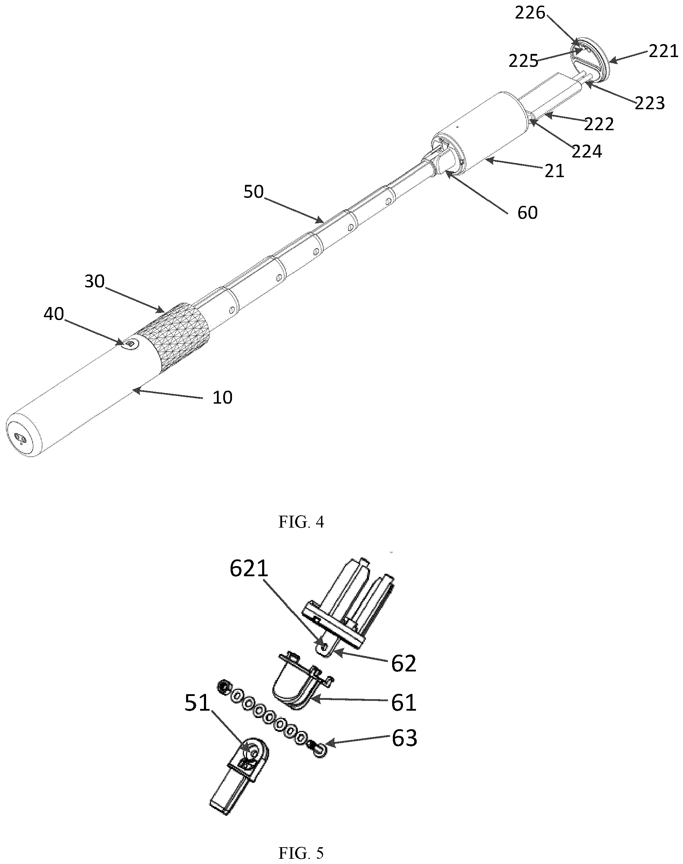

As shown in FIGS. 1-5, the present disclosure provides a selfie stick. The selfie stick comprises a handle 10 and a clamping device 20 connected with the handle 10 and configured to clamp a shooting device. A capacitive touch module 30 is arranged on a surface of the handle 10. The capacitive touch module 30 is provided with a curved surface. The capacitive touch module 30 is configured to control the matched shooting device. By providing the handle 10, the clamping device 20 configured to clamp the shooting device, and the capacitive touch module 30 of the curved surface arranged on the surface of the handle 10 that configured to control the matched shooting device, and by controlling the capacitive touch module 30 to control the shooting device matched with the selfie stick, a use does not need to pull the shooting device close for adjustment, which is convenient in operation.

The shooting device may be a product with photographing function such as a mobile phone or a tablet. The shooting device in the embodiment is selected from the mobile phone as an example for description.

The capacitive touch module 30 can be matched and connected with the mobile phone through a variety of circuit methods. For example, a connecting line may be arranged on the selfie stick and plugged into an earphone jack of the mobile phone, or, the selfie stick may be connected with the mobile phone via a wireless manner through a BLUETOOTH function.

A control of the shooting device comprises controlling commonly used selfie functions in a beauty camera application installed in the shooting device, such as: adjusting a filter, adjusting a focus, selecting shooting scenes (scenes such as cute shooting, beauty, makeup, etc.), etc. It is convenient to operate the selfie stick and photographing can be realized by the capacitive touch module 30.

Of course, in the embodiment, a control button 40 connected with the shooting device is arranged on the handle 10. The user only need to press the control button 40 to realize taking a picture. In addition, a telescopic rod 50 is connected to the handle 10 and the clamping device 20 respectively. The telescopic rod 50 is configured to adjust a distance between the clamping device 20 and the handle 10, so as to realize an adjustment of a distance between the shooting device and the user. Further, the telescopic rod 50 is configured to store the clamping device 20, which reduces an overall volume of the selfie stick and is convenient to carry.

Specifically, the capacitive touch module 30 is arranged on the handle 10 close to one end where the handle 10 is connected to the telescopic rod 50.

Furthermore, the capacitive touch module 30 is ringed on the handle 10 and has an uneven surface.

Specifically, the capacitive touch module 30 is an uneven surface formed by a plurality of diamond-shaped grooves 31 arranged on the handle 10. The capacitive touch module 30 is arranged as the uneven surface, which is ringed on the handle 10 and formed by the plurality of diamond-shaped grooves 31, so that the surface of the selfie stick is more beautiful. Of course, in other embodiments, grooves of other shapes may be ringed on the handle 10 to form the uneven surface.

In the embodiment, the clamping device 20 comprises a stage 21 and a stretchable clamping mechanism 22 arranged on the stage 21. The stretchable clamping mechanism 22 is configured to clamp the shooting device. When taking pictures by the shooting device, the shooting device is placed on the stage 21, and the stretchable clamping mechanism 22 is controlled to clamp the shooting device to realize a positioning of the shooting device.

Furthermore, the stage 21 is of a cylindrical structure. The stage comprises a storage groove 23. The stretchable clamping mechanism 22 is movably received in the storage groove 23. The stage 21 comprises the storage groove 23. When the selfie stick is not used, the stretchable clamping mechanism 22 is received in the storage groove 23 of the stage 21. The overall size of the selfie stick is small, which is convenient to carry.

The stretchable clamping mechanism 22 comprises an upper clamping plate 221, a connecting plate 222, at least one first pulling rod 223, and at least one second pulling rod 224. At least one first blind hole (not shown) and at least one second blind hole(not shown) are on the connecting plate 222. The upper clamping plate 222 is connected with the at least one first pulling rod 223. The at least one first pulling rod 223 is movably arranged in the at least one first blind hole. The stage 21 is connected with the at least one second pulling rod 224. The at least one second pulling rod 224 is movably arranged in the at least one second blind hole. The user is able to adjust a depth of the first pulling rod 223 into the first blind hole by pulling the upper clamping 221 to clamp the shooting device. By adjusting a depth of the at least one second pull rod 224 into the at least one second blind hole, the connecting plate 222 can be received in the storage groove of the stage 21.

Specifically, the stretchable clamping mechanism 22 comprises two first pulling rods 223 and two second pulling rods 224. Two first blind holes and two second blind holes are on two sides of the connecting plate 222. The two first blind holes are matched with the two first pulling rod 223, the two second blind holes are arranged in a staggered position with respect to the first blind holes, and the second blind holes are matched with the second pulling rods 224, which make a structure of the stretchable clamping mechanism 22 stable.

Furthermore, at least one first protrusion 225 and at least one first groove 228 are arranged on an end surface of the upper clamping plate 221 close to the stage 21, At least one second groove 211 and at least one second protrusion 212 are arranged on the end surface of the stage 21 contacting the upper clamping plate 221. The at least one second groove 211 is matched with the at least one first protrusion 225. The at least one second protrusion 212 is matched with the at least one first groove 228. The connecting plate 222 is movably received in the storage groove 23. The upper clamping plate 221 is matched with the end surface of the stage 21. Arrangements of the at least one first protrusion 225, the at least one second protrusion 212, the at least one first groove 228, and the at least one second groove 211 prevent the upper clamping plate 221 from sliding off the end surface of the stage 21, and make a structure of the upper clamping plate 221 stable.

In the embodiment, the selfie stick further comprises a connecting portion 60. The clamping device 20 is rotatably arranged on one end of the handle 10 through the connecting portion 60. Of course, the telescopic rod 50 may be connected to the handle 10 and the clamping device 20 respectively, and the connecting portion 60 is arranged between the telescopic rod 50 and the clamping device 20. The clamping device 20 is rotatably mounted on an end portion of the telescopic rod 50 through the connecting portion 60.

Specifically, a first through hole 51 is on the end portion of the telescopic rod 50 connected to the connecting portion 60. The connecting portion 60 comprises two ear protectors 61, a connecting end 62 of a second through hole 621, and a rotating shaft. The two ear protectors 61 are fixedly connected to the clamping device 20. The \connecting end 62 of the second through hole is arranged between the two ear protectors 61 and is matched with the first through hole 51. The rotating shaft passes through the first through hole 51 and the second through hole 621.

The rotating shaft is a screw 63. The connecting end 62 of the connecting portion 60 uses the screw 63 as the rotating shaft to pass through the second through hole 621 and the first through hole 51, so that the connecting portion 60 is rotatably connected to the end portion of the telescopic rod 50, and the clamping device 20 is rotatably amounted on the end portion of the telescopic rod 50 by the connecting portion 60. Thus, the user is able to adjust a hooting angle of the shooting device.

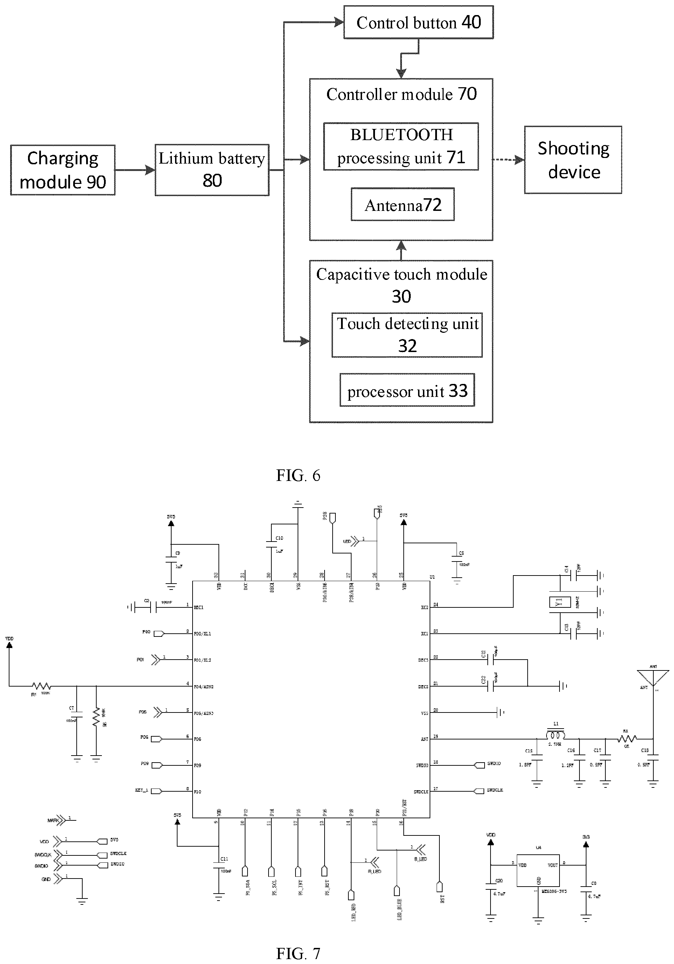

As shown in FIGS. 6-9, the present disclosure provides a photographing control system.

The photographing control system comprises the selfie stick described above. The photographing control system further comprises a controller module 70 arranged in the handle 10. The controller module 70 is respectively connected with the shooting device and the capacitive touch module 30. The controller module 70 receives a touch signal of the capacitive touch module 30, processes it, and transmits it to the shooting device. The shooting device performs corresponding operations according to the signal transmitted by the controller module 70, so that the control of the matched shooting device is realized.

The capacitive touch module 30 can be matched and connected with the mobile phone through a variety of circuit methods. For example, the connecting line may be arranged on the selfie stick and plugged into the earphone jack of the mobile phone, or, the selfie stick may be connected with the mobile phone via the wireless manner through the BLUETOOTH function.

In the embodiment, the selfie stick is wirelessly connected with the mobile phone through the BLUETOOTH function.

The user controls the capacitive touch module 30, and the controller module 70 processes the touch signal and transmits the touch signal to the shooting device, so as to control the shooting device without pulling the shooting device close for operation, which is convenient for operation.

Specifically, the capacitive touch module 30 comprises a touch detecting unit 32 ringed on the handle and a processor unit 33. The processor unit 33 is connected with the controller module 70 and the touch detecting unit 32. The touch detecting unit 32 transmits the touch signal to the processor unit 33 for processing.

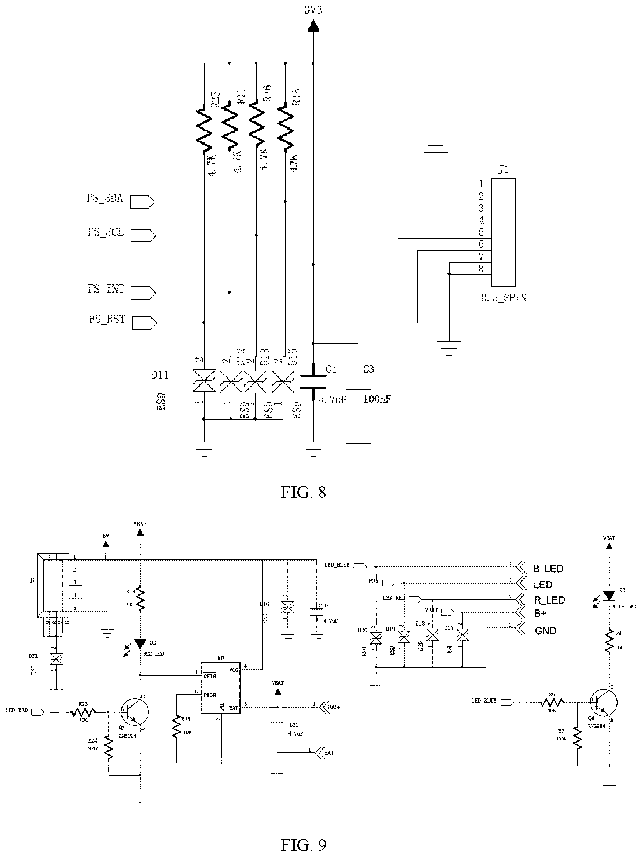

As shown in FIGS. 7 and 8, since the human body is conductive, a circuit corresponding to the touch detecting unit 32 generates a uniform electrostatic field. When a finger touches the touch detecting unit 32 and slides on it, a capacitance on a surface of the touch detecting unit 32 changes. The circuit corresponding to the touch detecting unit 32 makes judgments according to change of capacitance, and realizes a predetermined function, J1 shown in FIG. 8 is an internal and external interface of the touch detecting unit 32. When the finger touches the touch detecting unit 32 and slides on it, the processor unit 33 transmits data of finger sliding to the controller module 70 through a clock line and a signal line, and then the controller module 70 wirelessly transmits it to the shooting device.

Specifically, the controller module 70 comprises a BLUETOOTH processing unit 71 and an antenna 72 connected with the BLUETOOTH processing unit 71. The BLUETOOTH processing unit 71 is connected with the shooting device and the processor unit 33. The BLUETOOTH processing unit 71 is connected with the processor unit 33 to obtain the data processed by the processor unit 33 and transmit the data to the shooting device through the antenna 72. After the BLUETOOTH processing unit 71 receives the data transmitted by the processor unit 33, it controls the antenna 72 to wirelessly transmit a control signal to the shooting device.

As shown in FIG. 7, FIG. 7 is a circuit schematic diagram of the controller module 70 of the present disclosure. The BLUETOOTH processing unit 71 of the present disclosure optionally adopts the NORDIC_nRF52810 chip. When using the shooting device to take selfies, most of the shooting device are mobile phones. A compatibility of the mobile phone with the NORDIC_nRF52810 chip is as high as 98%. The selfie stick is compatible with mobile phones that support Android 5.0 and above, and IOS 5.0.1 and above. The shooting device such as the mobile phone is rapidly wirelessly connected with the controller module through the BLUETOOTH function to realize transmission of control signals.

In the embodiment, the photographing control system further comprises a lithium battery 80 arranged in the handle 10 and a charging module 90. The lithium battery 80 is connected with the controller module 70 and the capacitive touch module 30. The charging module 90 is connected with the lithium battery 80. The lithium battery 80 is arranged in the handle 10 to provide operating voltage for the controller module 70 and the capacitive touch module 30. The lithium battery 80 arranged in the handle 10 can be charged through the charging module 90 when the selfie stick is not in use. The lithium battery 80 can be recharged many times, is environmentally friendly, and has a long service life.

Specifically, as shown in FIG. 9, FIG. 9 is a circuit schematic diagram of the charging module 90 of the present disclosure. The charging module 90 in the embodiment optionally uses a TP4054 chip. The TP4054 chip is a chip that uses a constant current/constant voltage linear method to charge lithium-ion batteries. Due to an internal PMOSFET architecture and an anti-reverse charging circuit are applied, external detection for resistors and isolation diodes are not required. The internal feedback inside the TP4054 chip adjusts a charging current to limit the chip temperature under high-power operation or high ambient temperature conditions. A charging voltage is fixed at 4.2V, and the charging current can be set externally through a resistor. When the charging current drops to 1/10 of a predetermined value after reaching a final float voltage, the TP4054 chip automatically terminates a charging cycle.

When there is no input voltage, the TP4054 chip automatically enters a low current state, reducing a battery leakage current to less than 1uA. Alternatively, the TP4054 chip may also be placed in a shutdown mode to reduce a supply current to 25uA. Other functions of the TP4054 chip comprises charging current monitoring, under-voltage lockout, automatic recharging. The TP4054 chip further comprises a status pin for indicating the end of charging and input voltage access.

The use of the TP4054 chip reduces external components of a control chip of the charging module, which makes a circuit structure of the charging module simple, is conducive to reducing an overall volume of a circuit board, is conducive to miniaturization of the selfie stick, and is convenient to carry.

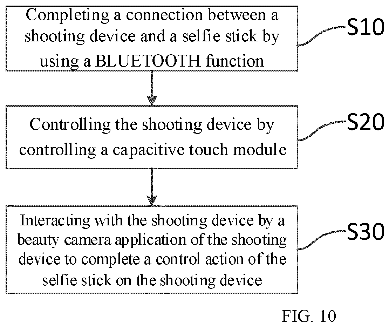

As shown in FIG. 10, the present disclosure provides a photographing control method. The photographing control method is applied to the photographing control system described above. The photographing control method comprises steps:
S10: completing a connection between a shooting device and a selfie stick by using a BLUETOOTH function;
S20: controlling the shooting device by controlling a capacitive touch module; and
S30: interacting with the shooting device by a beauty camera application of the shooting device to complete a control action of the selfie stick on the shooting device;

The photographing control method of the present disclosure is applied to the photographing control system. After the shooting device is matched and connected with the selfie stick via the BLUETOOTH function, the capacitive touch module 30 is controlled. Then, the shooting device receives the touch signal of the capacitive touch module 30, and the shooting device performs data interaction with its installed beauty camera application in the background, so that the operation of the commonly used selfie adjustment functions of the beauty camera application in the shooting device is realized by controlling the capacitive touch module 30. The commonly used selfie adjustment functions comprises an adjustment of the filter, an adjustment of the focus and a selection of shooting scenes (such as cute shooting, beautification, beauty makeup, etc.

Further, selfies are taken through the capacitive touch module 30, without the need to pull the shooting device closer for adjustment, which is convenient to operate.

It should be understood that above embodiments are only used to illustrate the technical solutions of the present disclosure, not to limit them. For those skilled in the art, the technical solutions described in the above embodiments can be modified or some of technical features can be modified or performed equivalent replacements, and all these modifications and replacements should fall within the protection scope of the claims of the present disclosure.

## Claims

1. A selfie stick, comprising:
a handle; and
a clamping device connected with the handle and configured to clamp a shooting device;
wherein a capacitive touch module is arranged on a surface of the handle; the capacitive touch module is provided with a curved surface; the capacitive touch module is configured to control the shooting device.

2. The selfie stick according to claim 1, wherein the clamping device comprises a stage and a stretchable clamping mechanism arranged on the stage; the stretchable clamping mechanism is configured to clamp the shooting device.

3. The selfie stick according to claim 2, wherein the stage is of a cylindrical structure; the stage comprises a storage groove; the stretchable clamping mechanism is movably received in the storage groove.

4. The selfie stick according to claim 3, wherein the stretchable clamping mechanism comprises an upper clamping plate, a connecting plate, at least one first pulling rod, and at least one second pulling rod; at least one first blind hole and at least one second blind hole are on the connecting plate; the upper clamping plate is connected with the at least one first pulling rod; the at least one first pulling rod is movably arranged in the at least one first blind hole; the stage is connected with the at least one second pulling rod; the at least one second pulling rod is movably arranged in the at least one second blind hole.

5. The selfie stick according to claim 1, wherein the selfie stick further comprises a connecting portion; the clamping device is rotatably arranged on one end of the handle through the connecting portion.

6. The selfie stick according to any claims 1-5, wherein the capacitive touch module is ringed on the handle and has an uneven surface.

7. A photographing control system, comprising:
a selfie stick according to any claims 1-6;
wherein the photographing control system further comprises a controller module arranged in the handle; the controller module is respectively connected with the shooting device and the capacitive touch module.

8. The photographing control system according to claim 7, wherein the capacitive touch module comprises a touch detecting unit ringed on the handle and a processor unit; the processor unit is connected with the controller module and the touch detecting unit; the touch detecting unit transmits a touch signal to the processor unit for processing .

9. The photographing control system according to claim 8, wherein the controller module comprises a BLUETOOTH processing unit and an antenna connected with the BLUETOOTH processing unit; the BLUETOOTH processing unit is connected with the shooting device and the processor unit; the BLUETOOTH processing unit is connected with the processor unit to obtain data processed by the processor unit and transmit the data to the shooting device through the antenna.

10. The photographing control system according to claim 9, wherein the photographing control system further comprises a lithium battery arranged in the handle and a charging module; the lithium battery is connected with the controller module and the capacitive touch module; the charging module is connected with the lithium battery.

11. A photographing control method, comprising:
completing a connection between a shooting device and a selfie stick by using a BLUETOOTH function;
controlling the shooting device by controlling a capacitive touch module; and
interacting with the shooting device by a beauty camera application of the shooting device to complete a control action of the selfie stick on the shooting device;
wherein the photographing control method is applied to a photographing control system according to any claims 8-10.
